# EUROPÄISCHE PATENTSCHRIFT

(11) **EP 0 622 814 B1**
(45) Veröffentlichungstag und Bekanntmachung des Hinweises auf die Patenterteilung: **18.08.1999**
(21) Anmeldenummer: 94250098.4
(22) Anmeldetag: 15.04.1994
(51) Int. Cl.: H01F 38/22

(54) **Messwandler Anordnung**
Transducer arrangement
Transducteur arrangement

(30) Priorität: 30.04.1993 DE 4314822
(43) Veröffentlichungstag der Anmeldung: 02.11.1994
(73) Patentinhaber: SIEMENS AKTIENGESELLSCHAFT, 80333 München (DE)
(72) Erfinder: Gorablenkow, Jörg, Dipl.-Ing., D-13591 Berlin (DE); Lorenz, Dieter, Dipl.-Ing., D-12207 Berlin (DE)

(56) Entgegenhaltungen:
- DE-A- 2 325 441
- DE-A- 4 121 653

## Beschreibung

Die Erfindung bezieht sich auf eine Meßwandleranordnung mit einem Meßwandler, insbesondere Strom- oder Spannungswandler mit einer Meßleitung zum Einbau in ein von einem Hochspannungsleiter in axialer Richtung durchsetztes Kapselungsgehause einer Hochspannungsschaltanlage, wobei der Meßwandler an einem metallischen Ringflansch tragend befestigt ist, dessen Dicke in axialer Richtung geringer ist als die Länge des Meßwandlers in dieser Richtung.

Ein Meßwandler ist beispielsweise aus der DE-OS 2 325 441 bekannt. Bei dem dort beschriebenen Meßwandler ergibt sich beim Einbau in eine Hochspannungsschaltanlage das Problem, das sich beim Ein- und Ausbau des Strom- bzw. Spannungswandlers jeweils ein erheblicher Montageaufwand für die Installation bzw. Demontage der Meßleitungen ergibt.

Ein Meßwandler ist auch aus der DE-OS 41 21 653 bekannt. Bei der dort beschriebenen Anordnung ist zwar die Befestigung an einem Flansch erwähnt, jedoch ist der Flansch selbst dort ebenso lang wie der Wandler.

Der Erfindung liegt die Aufgabe zugrunde, einen Meßwandler der eingangs genannten Art zu schaffen, der leicht ein- und ausbaubar ist.

Die Aufgabe wird erfindungsgemäß dadurch gelöst, daß der Ringflansch wenigstens eine isolierte, gasdichte Durchführung für eine Meßleitung des Meßwandlers aufweist, und daß die Meßleitung innerhalb des Kapselungsgehauses durch ein metallisches, tragend an dem Ringflansch befestigtes Rohr von dem Hochspannungsleiter abgeschirmt ist.

Dadurch, daß die Maße des Ringflansches in axialer Richtung klein gehalten werden, vergrößert sich das Kapselungsgehause bei Einbau des erfindungsgemaßen Meßwandlers nur wenig. Der Ringflansch kann zwischen zwei rohrförmigen Gehäuseteilen des Kapselungsgehauses der Schaltanlage unter Zwischenlage von Dichtungsringen festgeklemmt werden. Der Meßwandler ragt damit über den Ringflansch hinaus in die übrigen Teile des Kapselungsgehäuses hinein.

Da die Durchführung für die Meßleitung im Ringflansch angeordnet ist, kann der Ringflansch mit dem Meßwandler zusammen aus der Schaltanlage ausgebaut werden, ohne daß die Meßleitungen entfernt werden müssen. Dies ist insbesondere bei geeichten Wandlern von Vorteil, da die Meßleitungen nicht ab- und angeklemmt werden müssen, was gegebenenfalls eine erneute Eichung notwendig machen würde.

Durch das metallische Rohr, beispielsweise das Tragrohr eines Stromwandlers oder eine Elektrode eines Spannungswandlers werden elektromagnetische Störungen von der Meßleitung ferngehalten.

Die Dicke des Ringflansches braucht nur so gering zu sein, daß die Durchführung gerade in seiner Außenwand Platz hat.

Eine weitere vorteilhafte Ausgestaltung der Erfindung sieht vor, daß der Meßwandler ein Ringkernstromwandler ist, dessen die Ringkerne tragendes Tragrohr einstückig mit dem Ringflansch ausgebildet ist.

Ein solcher Ringkernstromwandler kann erfindungsgemäß ohne eine erhebliche Vergrößerung des Kapselungsgehäuses eingesetzt werden und umgibt den Hochspannungsleiter koaxial. Bei der Montage kann der Stromwandler an dem Ringflansch befestigt werden und auch die Meßleitungen können vor dem Einsetzen des Ringflansches in das Kapselungsgehause an der Durchführung befestigt werden. Es werden dadurch umständliche Montagearbeiten im Inneren des Kapselungsgehäuses zum Anschluß der Meßleitungen überflüssig.

Eine weitere vorteilhafte Ausgestaltung der Erfindung sieht vor, daß der Meßwandler ein Spannungswandler ist, dessen Meßelektrode in den Ringflansch integriert ist.

Ein solcher Spannungswandler kann vor dem Einsetzen des Ringflansches in das Kapselungsgehause betriebsfertig montiert werden. Hierdurch werden aufwendige Montagearbeiten innerhalb des Kapselungsgehäuses überflüssig.

Im folgenden wird die Erfindung anhand eines Ausführungsbeispiels in einer Zeichnung gezeigt und anschließend beschrieben.

Dabei zeigt
Figur 1 einen erfindungsgemäßen Stromwandler in einem schematischen Längsschnitt,
Figur 2 einen erfindungsgemäßen Spannungswandler in einem schematischen Längsschnitt.

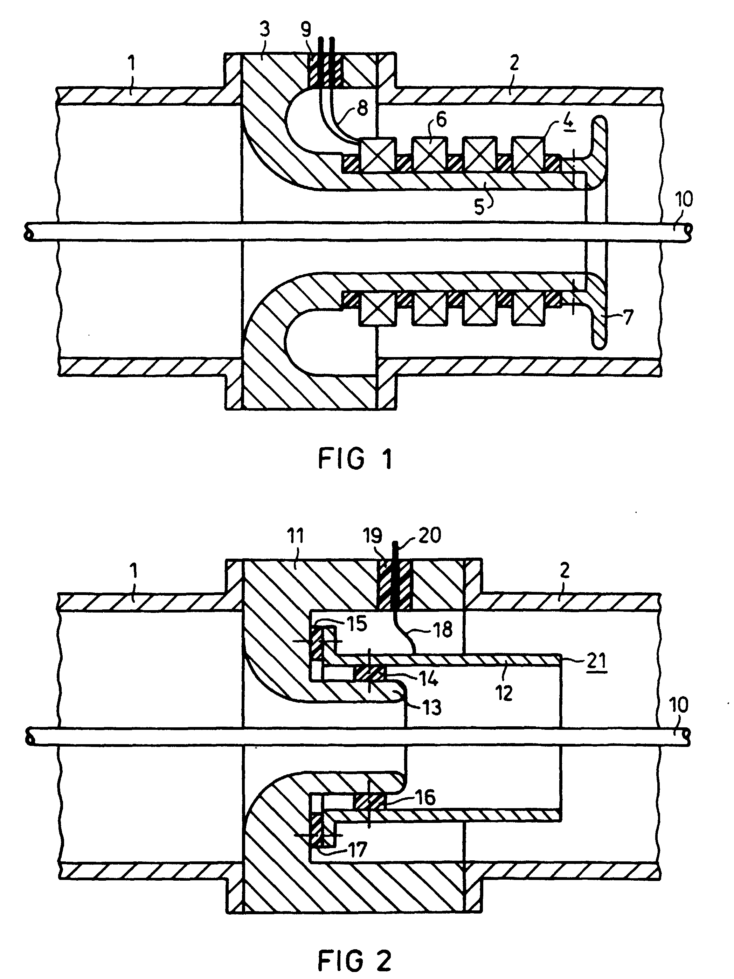

Figur 1 zeigt zwei Teile 1, 2 eines Kapselungsgehäuses eines Hochspannungsschaltanlage. Zwischen den Teilen 1 und 2 ist ein Ringflansch 3 eingebaut, der einen Stromwandler 4 trägt. Das Tragrohr 5 des Stromwandlers 4 ist einstückig als Gußteil mit dem Ringflansch 3 verbunden. Auf das Tragrohr 5 sind vier Ringkerne 6 aufgeschoben und dort durch Vergießen fixiert. Nach dem Aufschieben der Ringkerne ist eine Abschirmelektrode 7 an dem dem Ringflansch 3 gegenüberliegenden Ende des Tragrohres 5 durch Schrauben an dem Tragrohr 5 befestigt. Die Meßleitungen 8, die von den Ringkernen 6 des Stromwandlers 4 ausgehen, sind durch eine Durchführung 9 an dem Ringflansch 3 durchgeführt.

Das Tragrohr 5 mit den Ringkernen 6 ragt aus dem Inneren des Ringflansches 3 heraus und in das Gehäuseteil 2 des Kapselungsgehäuses hinein. Der Stromwandler 4 ist von einem Hochspannungsleiter 10 koaxial durchsetzt.

Gemäß der Figur 2 ist zwischen den Gehäuseteilen 1, 2 ein Ringflansch 11 angeordnet, in den eine Meßelektrode 12 eines Spannungswandlers 21 integriert ist. Der Ringflansch weist auf seiner Innenseite einen Fortsatz 13 auf, der die rohrförmige Elektrode 12 trägt. Dabei sind zwischen dem Fortsatz 13 bzw. dem Ringflansch 11 und der rohrförmigen Elektrode 12 Isolierstücke 14, 15, 16, 17 angeordnet, so daß die Elektrode 12 von dem Ringflansch 11 isoliert befestigt ist.

Von der Elektrode 12 geht eine Meßleitung 18 zu der Durchführung 19, die in den Ringflansch integriert ist und auf der Außenseite des Ringflansches 11 ist ein Meßanschluß 20 vorgesehen. Die Gehäuseteile 1, 2, 11 sowie die rohrförmige Elektrode 12 sind koaxial von einem Hochspannungsleiter 10 durchsetzt.

## Patentansprüche

1. Meßwandleranordnung mit einem Meßwandler (4, 21), insbesondere Strom- oder Spannungswandler und mit einer Meßleitung (8, 18) zum Einbau in ein von einem Hochspannungsleiter (10) in axialer Richtung durchsetztes Kapselungsgehäuse einer Hochspannungsschaltanlage, wobei der Meßwandler (4, 21) an einem metallischen Ringflansch (3, 11) tragend befestigt ist, dessen Dicke in axialer Richtung geringer ist als die Länge des Meßwandlers in dieser Richtung,
**dadurch gekennzeichnet**, daß
der Ringflansch (3, 11) wenigstens eine isolierte, gasdichte Durchführung (9, 19) für die Meßleitung (8, 18) des Meßwandlers (4, 21) aufweist, und daß die Meßleitung innerhalb des Kapselungsgehäuses durch ein metallisches, tragend an dem Ringflansch befestigtes Rohr (5, 12) von dem Hochspannungsleiter abgeschirmt ist.

2. Meßwandler nach Anspruch 1,
**dadurch gekennzeichnet**, daß
der Meßwandler ein Ringkernstromwandler (4) ist, dessen die Ringkerne (6) tragendes Tragrohr (5) einstückig mit dem Ringflansch (3, 11) ausgebildet ist.

3. Meßwandler nach Anspruch 1,
**dadurch gekennzeichnet**, daß
der Meßwandler ein Spannungswandler (21) ist, dessen Meßlektrode (12) in den Ringflansch (3, 11) integriert ist.

## Claims

1. Instrument transformer arrangement having an instrument transformer (4, 21), in particular a current transformer or voltage transformer, and having an instrument lead (8, 18) for installation in an enclosure housing of a high-voltage switchgear that is penetrated in the axial direction by a high-voltage conductor (10), the instrument transformer (4, 21) being fastened in a load-bearing manner to a metallic ring flange (3, 11), the thickness of which in the axial direction is less than the length of the instrument transformer in this direction, characterised in that the ring flange (3, 11) has at least one insulated, gastight leadthrough (9, 19) for the instrument lead (8, 18) of the instrument transformer (4, 21), and in that the instrument lead inside the enclosure housing is screened from the high-voltage conductor by a metallic tube (5, 12) which is fastened in a load-bearing manner to the ring flange.

2. Instrument transformer according to claim 1, characterised in that the instrument transformer is a toroidal-core current transformer (4), the supporting tube (5) of which, which supporting tube supports the toroidal cores (6), is constructed in one piece with the ring flange (3, 11).

3. Instrument transformer according to claim 1, characterised in that the instrument transformer is a voltage transformer (21), the measuring electrode (12) of which is integrated in the ring flange (3, 11).

## Revendications

1. Dispositif transformateur, comportant un convertisseur de mesure (4, 21), notamment un convertisseur de courant ou un convertisseur de tension, et comportant une ligne de mesure (8, 18) destinée à être montée dans un boîtier de blindage, traversée par un conducteur (10) haute tension suivant une direction axiale, d'une installation de coupure haute tension, le transformateur (4, 21) de mesure étant fixé de manière portante à une bride (3, 11) métallique annulaire, dont l'épaisseur en direction axiale est inférieure à la longueur du transformateur de mesure dans cette direction, caractérisé en ce que la bride (3, 11) annulaire comporte au moins une traversée (9, 19) isolée, étanche au gaz, pour la ligne (8, 18) du transformateur (4, 21) de mesure, et en ce que la ligne de mesure est, à l'intérieur du boîtier de blindage, protégée du conducteur haute tension par un tube (5, 12) métallique, fixé de manière portante à la bride annulaire.

2. Transformateur de mesure suivant la revendication 1, caractérisé en ce que le transformateur de mesure est un transformateur (4) de courant à noyaux toroïdaux dont le tube (5) de support portant les noyaux (6) toroïdaux est réalisé d'un seul tenant avec la bride (3, 11) annulaire.

3. Transformateur de mesure suivant la revendication 1, caractérisé en ce que le transformateur de mesure est un transformateur (21) de tension, dont l'électrode (12) de mesure est intégrée à la bride (3, 11) annulaire.
